(19) Europäisches Patentamt
European Patent Office
Office européen des brevets

(11) Veröffentlichungsnummer: **0 314 983 A2**

# (12) EUROPÄISCHE PATENTANMELDUNG

(21) Anmeldenummer: **88117450.2**

(22) Anmeldetag: **20.10.88**

(51) Int. Cl.4: **C08G 59/14 , C08G 59/40 , C08G 59/50 , C08G 59/54 , C09D 5/44**

(30) Priorität: **31.10.87 DE 3736995**

(43) Veröffentlichungstag der Anmeldung: **10.05.89 Patentblatt 89/19**

(84) Benannte Vertragsstaaten: **AT BE CH DE ES FR GB IT LI NL SE**

(71) Anmelder: **BASF Lacke + Farben Aktiengesellschaft**
**Postfach 61 23**
**D-4400 Münster(DE)**

(72) Erfinder: **Lawrenz, Dirk, Dr.**
**Neumuehle**
**D-6733 Hassloch(DE)**
Erfinder: **Perner, Thomas, Dr.**
**Berner Weg 24**
**D-6700 Ludwigshafen(DE)**
Erfinder: **Schwerzel, Thomas, Dr.**
**Budapester Strasse 51**
**D-6700 Ludwigshafen(DE)**
Erfinder: **Oslowski, Hans-Josef, Dr.**
**Heinrichstrasse 5**
**D-4400 Muenster(DE)**
Erfinder: **Heimann, Ulrich**
**Heideggerstrasse 29**
**D-4400 Muenster(DE)**

(74) Vertreter: **Springer, Hans Jörg, Dr. et al**
**BASF Aktiengesellschaft Patentabteilung**
**Carl-Bosch-Strasse 38**
**D-6700 Ludwigshafen(DE)**

## (54) Stickstoffbasische Gruppen tragendes Kunstharz und dessen Verwendung.

(57) Die vorliegende Erfindung betrifft stickstoffbasische Gruppen tragende, durch Protonierung mit Säure wasserverdünnbare Kunstharze, erhältlich durch Umsetzung von

A) einem Epoxidharz mit einem mittleren Molekulargewicht Mn von 300 bis 6000 und im Mittel 1,5 bis 3,0 Epoxidgruppen pro Molekül mit

B) einem sekundären aliphatischen Amin und

C) einem primären Amin und/oder diprimären Diamin und

D) einem α-Aminosäureamidamin, erhältlich durch Kondensation einer α-Aminocarbonsäure der allgemeinen Formel

EP 0 314 983 A2

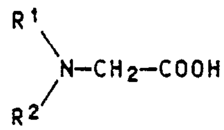

I,

wobei $R^1$ und $R^2$ gleich oder verschieden sind und für Wasserstoff-, Alkyl-, Cycloalkyl-, Hydroxyalkyl-, Alkoxyalkyl- oder Carboxyalkyl-Reste stehen, mit einem 1,5 bis 10 molaren überschuß, bezogen auf die Carboxylgruppen, eines diprimären Diamins und ggf. anschließender Abdestillation des überschüssigen Diamins
sowie deren Verwendung als Überzugsmittel, insbesondere für die kathodische Elektrotauchlackierung.

## Stickstoffbasische Gruppen tragendes Kunstharz und dessen Verwendung

Die vorliegende Erfindung betrifft stickstoffbasische Gruppen tragende, durch Protonierung mit Säure wasserverdünnbare Kunstharze sowie deren Verwendung als Überzugsmittel, insbesondere für die kathodische Elektrotauchlackierung.

Die meisten der heute gebräuchlichen Elektrotauchlacke mit hohem Umgriff und gutem Korrosionsschutz bestehen aus Amino-Epoxidharzen auf Basis Bisphenol A (2,2-Bis-(4-hydroxyphenyl)-propan) und Aminen und/oder Aminoalkoholen, wie sie beispielsweise in den DE-A 34 22 457, DE-A 33 25 061 oder DE-A 34 44 110 beschrieben sind. Die Vernetzung dieser Bindemittel erfolgt meist thermisch bei Einbrenntemperaturen zwischen 120 und 200 °C. Trotz des insgesamt positiven Eigenschaftsbildes der so erhaltenen Lacke weisen sie in bestimmten Bereichen Mängel auf, die sie für eine Anwendung in besonders anspruchsvollen Bereichen, wie sie etwa in der Karosseriebeschichtung in der Automobilindustrie gegeben sind, nicht geeignet erscheinen lassen. So war insbesondere die Haftung der Lackfilme auf nicht vorbehandeltem Stahlblech sowie auf sehr glatten Metalloberflächen nicht zufriedenstellend.

Ziel der Arbeiten war es daher vor allem, die Haftung der Lackfilme auf den vorstehend genannten Substraten zu verbessern. Überraschenderweise wurde dabei gefunden, daß eine Modifizierung der stickstoffbasischen Kunstharze durch Aminosäurederivate die vorstehend genananten Mängel beseitigt und zusätzlich für eine verbesserte Stabilität der Kunstharzdispersionen sorgt. Gegenstand der vorliegenden Erfindung sind stickstoffbasische Gruppen tragende, durch Protonierung mit Säure wasserverdünnbare Kunstharze, erhältlich durch Umsetzung von

A) einem Epoxidharz mit einem mittleren Molekulargewicht Mn von 300 bis 6000 und im Mittel 1,5 bis 3,0 Epoxidgruppen pro Molekül mit

B) einem sekundären aliphatischen Amin und

C) einem primären Amin und/oder diprimären Diamin und

D) einem α-Aminosäureamidamin, erhältlich durch Kondensation einer α-Aminocarbonsäure der allgemeinen Formel

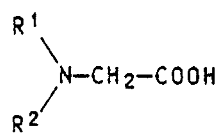

I,

wobei $R^1$ und $R^2$ gleich oder verschieden sind und für Wasserstoff-, Alkyl-, Cycloalkyl-, Hydroxyalkyl-, Alkoxyalkyl- oder Carboxyalkyl-Reste stehen, mit einem 1,5 bis 10 molaren Überschuß, bezogen auf die Carboxylgruppen, eines diprimären Diamins und ggf. anschließender Abdestillation des überschüssigen Diamins.

Gegenstand der vorliegenden Erfindung ist außerdem die Verwendung der erfindungsgemäßen, durch Protonierung mit Säure wasserverdünnbaren Kunstharze in Form wäßriger Dispersionen, die ggf. zusätzlich Vernetzer, organische Lösemittel, Pigmente und/oder weitere Hilfsstoffe enthalten, als Überzugsmittel, insbesondere für die kathodische Elektrotauchlackierung elektrisch leitfähiger Substrate.

Desgleichen bezieht sich die vorliegende Erfindung auf mit Lacküberzügen versehene Gegenstände, die durch Aufbringen der erfindungsgemäß hergestellten Kunstharze bzw. Überzugsmittel und Einbrennen erhalten worden sind.

Zu den Aufbau-Komponenten der erfindungsgemäßen Kunstharze und deren Herstellung ist im einzelnen folgendes zu sagen:

Als Epoxidharze (A) können solche verwendet werden, die ein mittleres Molekulargewicht $M_n$ von 300 bis 6000 und im Mittel 1,5 bis 3,0 Epoxidgruppen pro Molekül enthalten, vorzugsweise Verbindungen mit zwei Epoxidgruppen pro Molekül. Bevorzugt sind Epoxidharze mit mittleren Molekulargewichten $M_n$ von 350 bis 5000, insbesondere 350 bis 2000. Besonders bevorzugte Epoxidharze sind z.B. Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen.

Beispiele für geeignete Phenolverbindungen sind Resorcin, Hydrochinon, 2,2-Bis-(4-hydroxyphenyl)-propan (Bisphenol A), 4,4′-Dihydroxybenzophenon, Bis-(2-hydroxynaphthyl)methan, 1,1-Bis-(4-hydroxyphenyl)ethan und 1,5-Dihydroxynaphthalin.

In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise 2,2-Bis-(4-hydroxyphenyl)-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen.

Ebenfalls geeignet sind Polyglycidylether von mehrwertigen Alkoholen, wie Ethylenglykol, Diethylenglykol, Triethylenglykol, 1,2-Propylenglykol, 1,3-Propandiol, 1,5-Pentandiol, 1,2,6-Hexantriol, Glycerin und 2,2-Bis-(4-hydroxycyclohexyl)-propan.

Es können auch Polyglycidylester von Polycarbonsäuren verwendet werden

Weiterhin können auch heterocyclische Polyepoxidverbindungen verwendet werden, wie 1,3-Digylcidyl-5,5-dimethylhydantoin, Triglycidylisocyanurat oder Diepoxide aus Bisimiden.

Unter den erfindungsgemäß bevorzugten Polyglycidylethern von Polyphenolen sind diejenigen mit Epoxidäquivalentgewichten im Bereich von 180 bis 1000 besonders bevorzugt.

Aromatische Polyepoxide mit einem höheren Epoxidäquivalentgewicht können aus solchen mit einem niedrigeren Epoxidäquivalentgewicht und Polyphenolen hergestellt werden.

Als sekundäre Amine (B) können beliebige nicht aromatische Amine eingesetzt werden, wie z.B. Dialkylamine, wie Dimethylamin, Diethylamin, Diisopropylamin oder Dibutylamin. Bevorzugt sind jedoch Alkanolamine, wie z.B. Methylethanolamin, Ethylethanolamin, Diethanolamin, Methylisopropanolamin, Ethylisopropanolamin und Diisopropanolamin.

Als primäre Monoamine und/oder diprimäre Diamine (C) kommen im allgemeinen Kondensationsprodukte von Mono- und/oder Dicarbonsäuren mit diprimären Diaminen zum Einsatz. Als Monocarbonsäuren eignen sich $C_{12}$- bis $C_{18}$-Fettsäuren wie beispielsweise Ölsäure, Linolsäure oder Linolensäure sowie Leinölfettsäure, die diese Fettsäuren im Gemisch enthält. Geeignete Dicarbonsäuren sind beispielsweise dimerisierte bzw. oligomerisierte ungesättigte Fettsäuren, wie sie beispielsweise unter der Bezeichnung Pripol® der Firma Unichema im Handel sind. Als diprimäre diamine eignen sich beispielsweise Ethylendiamin, 1,3-Diaminopropan, 1,4-Diaminobutan, 1,6-Diaminohexan, 4,9-Dioxadodecandiamin-1,12, 4,4-Diaminodicyclohexylmethan, 9-Aminomethyl-stearylamin, 2-(3-Aminopropyl)-cyclohexylamin, sowie verzweigte Diamine wie z.B. 2-Methylpentandiamin und 2-Ethylbutandiamin. Damit die Carbonsäureamidamine noch freie primäre Aminogruppen enthalten, ist es erforderlich, mit einem ausreichenden Überschuß an diprimären Amin zu arbeiten. Im allgemeinen wird ein 1,5 bis 10 molarer, bevorzugt ein 2 bis 6 molarer, Überschuß an diprimärem Diamin verwendet, der ggf. nach der Kondensationsreaktion abdestilliert werden kann. Die diprimären Diamine können aber auch ohne Kondensationsreaktion mit den Carbonsäuren eingesetzt werden.

Um eine mehrfache Reaktion der primären Aminogruppen mit den Epoxidgruppen der Komponente (A) zu verhindern, ist es vorteilhaft, die primäre Aminogruppe durch Ketiminisierung mit einer Carbonylverbindung zu schützen und in dieser Form mit dem Epoxidharz umzusetzen. Derartige Ketimine lassen sich leicht aus Ketonen und primären Diaminen unter Entfernung des gebildeten Wassers, z.B. durch azeotrope Destillation erhalten.

Als Ketone sind vor allem solche geeignet, die außer der Keto-Gruppe keine weitere gegenüber einer primären Amingruppe reaktive Gruppierung enthalten. Beispiele geeigneter Ketone sind Aceton, Methylethylketon, Methylpropylketon, Methylisopropylketon, Methylisobutylketon, Methylisoamylketon, Diethylketon, Dipropylketon, Cyclohexanon. Besonders bevorzugte Ketone sind Aceton, Methylethylketon und Methylisobutylketon.

Die Komponente (D) kann durch Kondensation von α-Aminosäuren der allgemeinen Formel

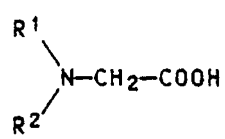

I,

mit diprimären Aminen hergestellt werden. Damit die Reaktionsprodukte noch freie primäre Aminogruppen enthalten, ist es erforderlich, mit einem ausreichenden Überschuß an diprimärem Amin zu arbeiten. Im allgemeinen wird mit einem 1,5 bis 10 molaren, bevorzugt 2 bis 6 molaren, Überschuß an diprimärem Diamin gearbeitet, wobei ggf. das überschüssige Diamin abdestilliert werden kann. In einer vorteilhaften Ausführungsweise werden die α-Aminosäuren zusammen mit den Mono- und Dicarbonsäuren und einem Überschuß an diprimärem Diamin umgesetzt, wobei gleichzeitig die erfindungsgemäßen Komponenten (C)

und (D) erhalten werden.

Die Reste $R^1$ und $R^2$ können gleich oder verschieden sein, und stehen für Wasserstoff-, Alkyl-, Cycloalkyl-, Hydroxyalkyl-, Alkoxyalkyl- oder Carboxyalkyl-Reste, bevorzugt für Hydroxyethyl- und Carboxymethylen-Reste. Beispiele für derartige Aminosäuren sind Ethanolaminoessigsäure, Diethanolaminoessigsäure, Iminodiessigsäure und Hydroxyethyliminodiessig säure. Als diprimäre Diamine werden bevorzugt $\alpha,\omega$-Diaminoalkane wie 1,6-Diaminohexan oder Amidamine dimerer Fettsäuren verwendet. In einer besonderen Ausführungsform (gemäß DE-A 34 44 110) können die verbleibenden primären Aminogruppen ketiminisiert sein.

Die Mengenverhältnisse der Komponenten (A), (B) und (C) sind in weiten Grenzen variierbar, die Komponente (D) wird in Mengen unter 10 Gew.%, bezogen auf die Gesamtmenge des Kunstharzes eingesetzt, bevorzugt in Mengen zwischen 0,01 und 5 Gew.%. Für die meisten erfindungsgemäßen Anwendungszwecke ist es wünschenswert, epoxidgruppenfreie Kunstharze herzustellen, d.h. pro Epoxidäquivalent des Epoxidharzes (A) werden 1 bis 2 Äquivalente der Amine und Ketimine der Komponenten (B), (C) und (D) verwendet. Das 1,2-epoxidgruppenhaltige Harz wird vor Zugabe des Amins in organischen Lösemitteln wie Toluol, Xylol oder Methylisobutylketon gelöst.

Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen. Ketimingruppen erfordern eine höhere Reaktionstemperatur zwischen 80 und 150 °C, bevorzugt zwischen 110 und 130 °C.

Die Aminzahlen der erfindungsgemäßen Kunstharze liegen zwischen 50 und 300, bevorzugt zwischen 50 und 150 mg KOH/g.

Die mittleren Molekulargewichte $M_n$ der erfindungsgemäßen Kunstharze betragen etwa 1000 bis 10000, bevorzugt sind Molekulargewichte $M_n$ zwischen 1500 und 5000.

Bei der Dispergierung der Kunstharze in Wasser hydrolysieren Epoxid-Ketimin-Addukte zu sekundären Aminogruppen.

Das erfindungsgemäße Kunstharz enthält nach der Behandlung mit Wasser Hydroxylgruppen, sekundäre Aminogruppen und zusätzlich primäre und/oder tertiäre Aminogruppen. Es ist daher einer Vielzahl von Vernetzungsreaktionen zugänglich, was es nach Zumischung geeigneter Vernetzer zu einem wertvollen Lackbindemittel macht.

Geeignete Vernetzer für das erfindungsgemäße Bindemittel sind z.B. blockierte Isocyanate, phenolische Mannichbasen, Harnstoffkondensationsprodukte, über Esteraminolyse und/oder Umesterung härtende Vernetzer und andere, dem Fachmann bekannte Vernetzerarten.

Es ist nicht unbedingt nötig, separate Vernetzer zuzusetzen, da Vernetzungsfunktionen auch ganz oder teilweise in das erfindungsgemäße Kunstharz eingebaut werden können, so daß es ganz oder teilweise selbstvernetzend wird. Dies kann z.B. erfolgen, indem man das Kunstharz nach der Herstellung mit einem teilgeblockten Isocyanat umsetzt, welches im Mittel noch eine freie Isocyanatgruppe pro Molekül enthält. Als Verkappungsmittel können dabei alle dem Fachmann bekannten Verbindungen eingesetzt werden, bevorzugt Alkohole, Amine und Oxime.

Eine weitere Möglichkeit, die erfindungsgemäßen Kunstharze wenigstens zum Teil selbstvernetzend herzustellen, besteht in der unvollständigen Umsetzung mit Vernetzungskomponenten bei erhöhten Temperaturen. Dieses Ankondensieren von Vernetzer und Bindemittel kann z.B. bei der Verwendung phenolischer Mannichbasen erfolgen.

Außer Vernetzern können weitere Stoffe wie Pigmente, Lackhilfsmittel, Lösemittel und Härtungskatalysatoren zugesetzt werden. Die so hergestellten Überzugsmittel können auch durch übliche Methoden auf Substrate wie Holz, Kunststoff oder Metall aufgebracht werden. Für die Elektrotauchlackierung wird das erfindungsgemäße Kunstharz in Verbindung mit Vernetzern und den genannten Zusatzstoffen durch Protonieren mit Säure in eine wasserlösliche Form überführt. Als Säuren werden bevorzugt Carbonsäuren wie Ameisensäure, Essigsäure oder Milchsäure verwendet, aber auch anorganische Säuren, wie z.B. Phosphorsäure können eingesetzt werden.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen von 15 bis 40 °C, während einer Zeit von 0,5 bis 5 Minuten und bei pH-Werten von 4,0 bis 8,5, vorzugsweise 5,0 bis 7,5, im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120 °C ca. 20 Minuten gehärtet.

Die folgenden Beispiele sollen die Erfindung näher erläutern, ohne sie einzuschränken.

Gemeinsame Herstellung der erfindungsgemäßen Komponenten (C) und (D)

Beispiel 1:

348 g 1,6-Diaminohexan, 348 g dimere Fettsäure (Pripol 1014 der Fa. Unichema), 84 g Leinölfettsäure (Nouracid® LE 80 der Fa. AKZO), 49 g Diethanolaminoessigsäure und 62.4 g Xylol wurden unter Rühren gemeinsam erhitzt. Bei einer Temperatur von 154 bis 180 °C wurden innerhalb von 4 Stunden 70.8 g Wasser/Xylol-Gemisch abdestilliert. Das Produkt hatte eine Aminzahl von 291 mg KOH/g.

Beispiel 2:

348 g 1,6-Diaminohexan, 348 g dimere Fettsäure (Pripol 1014), 84 g Leinölfettsäure (Nouracid LE 80), 35.7 g Ethanolaminoessigsäure und 61.4 g Xylol wurden unter Rühren gemeinsam erhitzt. Bei einer Temperatur von 154 bis 185 °C wurden innerhalb von 6.5 Stunden 60.3 g Wasser/Xylol-Gemisch abdestilliert. Das Produkt hatte eine Aminzahl von 313 mg KOH/g.

Beispiel 3:

348 g 1,6-Diaminohexan, 348 g dimere Fettsäure (Pripol 1014), 84 g Leinölfettsäure (Nouracid LE 80), 39.9 g Iminodiessigsäure und 61.7 g Xylol wurden unter Rühren gemeinsam erhitzt. Bei einer Temperatur von 158 bis 183 °C wurden innerhalb von 7 Stunden 30 g Wasser/Xylol-Gemisch abdestilliert. Das Produkt hatte eine Aminzahl von 207 mg KOH/g.

Beispiel 4:

348 g 1,6-Diaminohexan, 348 g dimere Fettsäure (Pripol 1014), 84 g Leinölfettsäure (Nouracid LE 80), 53.1 g Hydroxyethyliminodiessigsäure und 53.2 g Xylol wurden unter Rühren gemeinsam erhitzt. Bei einer Temperatur von 152 bis 190 °C wurden innerhalb von 2.2 Stunden 91 g Wasser/Xylol-Gemisch abdestilliert. Das Produkt hatte eine Aminzahl von 257 mg KOH/g.

Beispiel 5:

800.9 g des Amidamins aus Beispiel 1 wurden mit 795.9 g Methylisobutylketon gemeinsam erhitzt. Innerhalb von 9 Stunden wurden 81.6 g Waser azeotrop abdestilliert. Das Produkt hatte eine Aminzahl von 168 mg KOH/g.

Beispiel 6:

624 g des Amidamins aus Beispiel 4 wurden mit 585.4 g Methylisobutylketon gemeinsam erhitzt. Innerhalb von 10 Stunden wurden 58 g Wasser azeotrop abdestilliert. Das Produkt hatte eine Aminzahl von 149 mg KOH/g.

Kunstharzbindemittel 1

In einen Reaktionsgefäß wurden 1231.2 g eines Diglycidylethers aus 2,2-Bis-(4-hydroxyphenyl)-propan und Epichlorhydrin mit einem Äquivalentgewicht von 188, 336 g Bisphenol A und 82.8 g Propylglykolmonophenylether mit 0.4 g Triphenylphosphin zur Reaktion gebracht. Bei einer Reaktionstemperatur von 130 °C wurde nach 3.5 Stunden ein Produkt mit einem Epoxidäquivalentgewicht von 411 erhalten. Mit 588.6 g eines 9:1-Gemisches aus Isobutanol und Butylglykol wurde verdünnt und auf 60 °C gekühlt.

Anschließend wurden 108 g Methylethanolamin und 446.1 g des Produktes aus Beispiel 1 zugegeben und auf 80 °C erhitzt. Nach 2 Stunden war kein Epoxid mehr nachweisbar.

Das Kunstharz hatte eine Aminzahl von 104 mg KOH/g, einen Festkörpergehalt von 71 Gew.% und eine Platte/Kegel Viskosität von >4000 mPas bei 75° C.

Kunstharzbindemittel 2

In einem Reaktionsgefäß wurden 1231.2 g eines Diglycidylethers aus 2,2-Bis-(4-hydroxyphenyl)-propan und Epichlorhydrin mit einem Äquivalentgewicht von 188, 336 g Bisphenol A und 82.8 g Propylglykolmonophenylether mit 0.4 g Triphenylphosphin zur Reaktion gebracht. Bei einer Reaktionstemperatur von 130° C wurde nach 3.5 Stunden ein Produkt mit einem Epoxidäquivalentgewicht von 439 erhalten. Mit 588.6 g eines 9:1-Gemisches aus Isobutanol und Butylglykol wurde verdünnt und auf 60° C gekühlt.

Anschließend wurden 108 g Methylethanolamin und 449.3 g des Produktes aus Beispiel 2 zugegeben und auf 80° C erhitzt. Nach 2 Stunden war kein Epoxid mehr nachweisbar.

Das Kunstharz hatte eine Aminzahl von 103 mg KOH/g, einen Festkörpergehalt von 71 Gew.% und eine Platte/Kegel Viskosität von >4000 mPas bei 75° C.

Kunstharzbindemittel 3

In einem Reaktionsgefäß wurden 1231.2 g eines Diglycidylethers aus 2,2-Bis-(4-hydroxyphenyl)-propan und Epichlorhydrin mit einem Äquivalentgewicht von 188, 336 g Bisphenol A und 82.8 g Propylglykolmonophenylether mit 0.4 g Triphenylphosphin zur Reaktion gebracht. Bei einer Reaktionstemperatur von 130° C wurde nach 3.2 Stunden ein Produkt mit einem Epoxidäquivalentgewicht von 416 erhalten. Mit 588.6 g eines 9:1-Gemisches aus Isobutanol und Butylglykol wurde verdünnt und auf 60° C gekühlt.

Anschließend wurden 108 g Methylethanolamin und 469 g des Produktes aus Beispiel 3 zugegeben und auf 80° C erhitzt. Nach 2 Stunden war kein Epoxid mehr nachweisbar.

Das Kunstharz hatte eine Aminzahl von 98 mg KOH/g, einen Festkörpergehalt von 70 Gew.% und eine Platte/Kegel Viskosität von >4000 mPas bei 75° C.

Kunstharzbindemittel 4

In einem Reaktionsgefäß wurden 1231.2 g eines Diglycidylethers aus 2,2-Bis-(4-hydroxyphenyl)-propan und Epichlorhydrin mit einem Äquivalentgewicht von 188, 336 g Bisphenol A und 82.8 g Propylglykolmonophenylether mit 0.4 g Triphenylphosphin zur Reaktion gebracht. Bei einer Reaktionstemperatur von 130° C wurde nach 3.2 Stunden ein Produkt mit einem Epoxidäquivalentgewicht von 416 erhalten. Mit 588.6 g eines 9:1-Gemisches aus Isobutanol und Butylglykol wurde verdünnt und auf 60° C gekühlt.

Anschließend wurden 108 g Methylethanolamin und 477 g des Produktes aus Beispiel 4 zugegeben und auf 80° C erhitzt. Nach 2 Stunden war kein Epoxid mehr nachweisbar.

Das Kunstharz hatte eine Aminzahl von 105 mg KOH/g, einen Festkörpergehalt von 70 Gew.% und eine Platte/Kegel Viskosität von >4000 mPas bei 75° C.

Kunstharzbindemittel 5

In einem Reaktionsgefäß wurden 752 g eines Diglycidylethers aus 2,2-Bis-(4-hydroxyphenyl)-propan und Epichlorhydrin mit einem Äquivalentgewicht von 188, 205 g Bisphenol A und 50 g Propylglykolmonophenylether mit 0.3 g Triphenylphosphin zur Reaktion gebracht. Bei einer Reaktionstemperatur von 130° C wurde nach 3 Stunden ein Produkt mit einem Epoxidäquivalentgewicht von 430 erhalten. Mit 118 g Toluol wurde auf einen Festkörpergehalt von 85 Gew.% verdünnt.

Anschließend wurden 476 g des Produktes aus Beispiel 5 und 73 g Ethylethanolamin zugegeben und auf 120° C erhitzt. Nach 4 Stunden war kein Epoxid mehr nachweisbar. Mit 250 g eines 9:1-Gemisches aus Isobutanol und Butylglykol wurde auf einen Festkörpergehalt von 72 Gew.% verdünnt. Das Kunstharz hatte eine Aminzahl von 95 mg KOH/g und eine Platte/Kegel Viskosität von >1040 mPas (70 gew.%ig bei 75° C).

Kunstharzbindemittel 6

In einem Reaktionsgefäß wurden 752 g eines Diglycidylethers aus 2,2-Bis-(4-hydroxyphenyl)-propan und Epichlorhydrin mit einem Äquivalentgewicht von 188, 205.2 g Bisphenol A und 50.3 g Propylglykolmonophenylether mit 0.24 g Triphenylphosphin zur Reaktion gebracht. Bei einer Reaktionstemperatur von 130 °C wurde nach 3 Stunden ein Produkt mit einem Epoxidäquivalentgewicht von 432 erhalten. Mit 118.5 g Toluol wurde auf einen Festkörpergehalt von 85 Gew.% verdünnt. Anschließend wurden 537.9 g des Produktes aus Beispiel 6 und 72.6 g Ethylethanolamin zugegeben und auf 120 °C erhitzt. Nach 4 Stunden war kein Epoxid mehr nachweisbar. Mit 274 g eines 9:1-Gemisches aus Isobutanol und Butylglykol wurde auf einen Festkörpergehalt von 72 Gew.% verdünnt. Das Kunstharz hatte eine Aminzahl von .. mg KOH/g und eine Platte/Kegel Viskosität von 2080 mPas (70 gew.%ig bei 75 °C).

Vorprodukte für Vergleichsbindemittel:

Vorprodukt a)

In einem mit Wasserabscheider versehenen Gefäß wurden 12440 g Hexamethylendiamin, 18660 g dimere Fettsäure, 3000 g Leinölfettsäure und 2566 g Xylol zur Reaktion gebracht. Binnen 3 - 4 Stunden wurden ca. 1150 g Wasser und 1750 g Xylol abdestilliert. Das Produkt hatte eine Aminzahl von 233 mg KOH/g.

Vorprodukt b)

In einem mit einem Wasserabscheider versehenen Gefäß wurden 662 g des Vorproduktes 1 mit 566 g Methylisobutylketon zum Rückfluß erhitzt. Dabei wurden in 10 Stunden ca. 52 g Wasser abdestilliert. Das Produkt hatte eine Aminzahl von 134 und einen Lösemittelanteil von 25 Gew.%.

Kunstharzbindemittel 7 (Vergleichsbindemittel)

In einem Reaktionsgefäß wurden 752 g eines Diglycidylethers aus 2,2-Bis-(4-hydroxyphenyl)-propan und Epichlorhydrin mit einem Äquivalentgewicht von 190, 205 g Bisphenol A und 50 g Propylglykolmonophenylether mit 0.3 g Triphenylphosphin zur Reation gebracht. Bei einer Reaktionstemperatur von 130 °C wurde nach 3 Stunden ein Produkt mit einem Epoxidäquivalentgewicht von 430 erhalten. Mit 118 g Toluol wurde auf einen Festkörpergehalt von 85 Gew.% verdünnt. Anschließend wurden 598 g Vorprodukt b) und 72 g Ethylethanolamin zugegeben und auf 120 °C erhitzt. Nach 5 Stunden war kein Epoxid mehr nachweisbar. Mit 273 g eines 9:1-Gemisches aus Isobutanol und Butylglykol wurde auf einen Festkörpergehalt von 70 Gew.% verdünnt.

Kunstharzbindemittel 8 (Vergleichsbindemittel)

In einem Reaktionsgefäß wurden 815 g eines Diglycidylethers aus 2,2-Bis-(4-hydroxyphenyl)-propan und Epichlorhydrin mit einem Äquivalentgewicht von 188, 214.4 g Bisphenol A und 53.6 g Propylglykolmonophenylether mit 0.26 g Triphenylphosphin zur Reaktion gebracht. Bei einer Reaktionstemperatur von 130 °C wurde nach 3 Stunden ein Produkt mit einem Epoxidäquivalentgewicht von 429 erhalten. Mit 302 g Isobutanol und 212.4 g Toluol wurde verdünnt und auf 60 °C gekühlt. Anschließend wurden 70.8 g Methylethanolamin und 351.6 g des Vorproduktes a) zugegeben und auf 80 °C erhitzt. Nach 2 Stunden war kein Epoxid mehr nachweisbar. Das Kunstharz hatte eine Aminzahl von 105 mg KOH/g, einen Festkörpergehalt von 70 Gew.% und eine Platte/Kegel Viskosität von 4000 mPas 75 °C.

Vernetzungsmittel 1 (Harnstoffkondensationsprodukt)

134 g Trimethylolpropan, 366 g Harnstoff und 1548 g Di-n-butylamin wurden gemeinsam auf 140 °C erhitzt, bis die anfänglich heftige Ammoniak-Entwicklung weitgehend abgeklungen war (ca. 1 Stunde). Anschließend wurde die Temperatur auf 160 °C erhöht. Dann wurden binnen 1 Stunde 348 g Hexamethylendiamin zugegeben, während die Innentemperatur langsam auf 190 bis 200 °C gesteigert wurde. Nach 8-stündiger Umsetzung bei 200 °C ließ man abkühlen auf 130 °C. Es wurden 2 g Dibutylzinndilaurat hinzugefügt und bei sukzessiver Steigerung der Innentemperatur auf 175 °C 1110) g Di-n-butylamin abdestilliert. Der Rückstand wurde mit 270 g Methylisobutylketon auf einen Festkörpergehalt von ca. 80 Gew.% verdünnt.

Vernetzungsmittel 2 (blockiertes Isocyanat)

666 g Isophorondiisocyanat wurden mit 537 g Toluol und 0.28 gDibutylzinndilaurat auf 60 °C erhitzt. Während 90 Minuten wurden 67 g Trimethylolpropan und 133 g eines Umsetzungsproduktes aus ca. 3 mol Ethylenoxid und einem mol Trimethylolpropan zugegeben. Nach weiteren 30 Minuten Reaktionszeit bei 60 °C wurden 387 g Dibutylamin zugegeben. Die Mischung wurde 60 Minuten bei 50 °C gerührt.

Der Vernetzer hatte einen Feststoffgehalt von 70 Gew.%.

Vernetzungsmittel 3 (phenolische Mannichbase)

152 g Bisphenol A, 63 g eines Diglycidylethers von Bisphenol A mit einem Epoxidäquivalentgewicht von 189 und 0.1 g Tributylphosphin wurden 1 Stunde auf 160 °C erhitzt. Nach dieser Zeit ließ sich kein Epoxid mehr nachweisen und es war ein kettenverlängertes Diphenol entstanden. Dazu wurden 53.8 g Isopropanol, 129 g Di-n-butylamin, 31.5 g Paraformaldehyd und 17.6 g Isobutanol gegeben und 2 Stunden auf 80 °C erhitzt. Das Produkt hatte einen Feststoffgehalt von 80 Gew.%.

Vernetzungsmittel 4 (blockiertes Isocyanat)

9000 g trimerisiertes Hexamethylendiisocyanat und 9861 g trimerisiertes Isophorondiisocyanat wurden zusammen mit 6477 g Toluol und 6477 g Methylisobutylketon auf 80 °C erhitzt. 11366 g Dibutylamin wurden innerhalb von 2 Stunden bei 80 °C zugegeben und weitere 60 Minuten bei dieser Temperatur gehalten. Das Produkte hatte einen Feststoffgehalt von 70 Gew.%.

Herstellung einer Pigmentpaste

640 g eines Diglycidylethers auf Basis von Bisphenol A und Epichlorhydrin mit einem Epoxidäquivalentgewicht von 485 und 160 g eines solchen mit einem Epoxidäquivalentgewicht von 189 wurden bei 100 °C gemischt. In einem weiteren Gefäß wurden 452 g Hexamethylendiamin vorgelegt, auf 100 °C erhitzt und 720 g der obigen heißen Epoxidharzmischung innerhalb einer Stunde zugegeben, wobei leicht gekühlt wurde, um die Temperatur bei 100 °C zu halten. Nach weiteren 30 Minuten wurde unter Temperaturerhöhung und vermindertem Druck das überschüssige Hexamethylendiamin abgezogen, wobei zum Schluß eine Temperatur von 205 °C und ein Druck von 30 mbar erreicht wurde. Anschließend wurden 57.6 g Stearinsäure, 172.7 g dimere Fettsäure und 115 g Xylol zugesetzt. Dann wurde innerhalb von 90 Minuten bei 175 bis 180 °C das gebildete Wasser azeotrop abdestilliert. Anschließend wurden 58 g Butylglykol und 322 g Isobutanol zugefügt. Das Produkt hatte einen Feststoffgehalt von 70 Gew.% und eine Viskosität, gemessen bei 75 °C mit einem Platte-Kegel-Viskosimeter, von 2240 mPas.

110 g des so erhaltenen Kunstharzes wurden in einer Kugelmühle zusammen mit 36 g Ethylenglycolmonobutylether, 3 g Essigsäure, 170 g Titandioxid, 18 g Bleisilikat, 4,5 g Ruß und 170 g Wasser bis zu einer Kornfeinheit von < 7 µm vermahlen.

Dispersionsherstellung

Die jeweiligen Kunstharzkomponenten 1 bis 7 wurdenb mit den in Tabelle 1 angegebenen Vernetzungsmitteln in solchen Mengen gemischt, daß die resultierende Mischung 137 g Feststoff im Mischungsverhältnis 70 Gew.% Kunstharzkomponente und 30 Gew.% Vernetzungskomponente enthält. Nach Zugabe von 3.1 g Essigsäure wurde mit entionisiertem Wasser unter Rühren eine 35 gew.%ige Dispersion hergestellt. Dazu wurden 139 g der oben angegebenen Pigmentpaste gegeben und mit entionisiertem Wasser auf 1000 g

aufgefüllt. Die so hergestellten Elektrotauchbäder werden 7 Tage bei 30 °C gerührt. Dann wurde bei der angegebenen Spannung während 2 Minuten ein als Kathode geschaltetes Blech beschichtet und anschließend während 20 Minuten bei 160 °C eingebrannt.

Die folgenden Beispiele zeigen die Anwendung der erfindungsgemäßen Bindemittelzusammensetzungen in kathodisch abscheidbaren Elektrotauchlacken:

| | | Nr. des Kunstharzbindemittels/Nr. des Vernetzers | | |
|---|---|---|---|---|
| | | 5/1 | 7/1 | 1/2 |
| Baddaten: | | | | |
| pH-Wert | | 7.5 | 6.7 | 7.6 |
| Leitfähigkeit | [µScm-1] | 2330 | 2230 | 2040 |
| Abscheidespannung | [V] | 300 | 280 | 310 |
| Filmeigenschaften: | | | | |
| Schichtdicke | [µm] | 20 | 15 | 22 |
| Unterrostung | [mm] | | | |
| 480 h ASTM* unbehandeltes Blech | | 1.9 | 2.6 | 3.4 |
| (mit Cu-Zusatz) | | - | - | - |
| 1000 h ASTM* phosph. Blech | | 0.26 | 0.30 | 0.34 |
| 10 Zyklen Klimawechseltest** | | 1.3 | 1.1 | 0.88 |

| | | Nr. des Kunstharzbindemittels/Nr. des Vernetzers | | |
|---|---|---|---|---|
| | | 2/2 | 3/2 | 4/2 |
| Baddaten: | | | | |
| pH-Wert | | 7.3 | 7.5 | 7.2 |
| Leitfähigkeit | [µScm-1] | 2160 | 2010 | 1870 |
| Abscheidespannung | [V] | 280 | 280 | 230 |
| Filmeigenschaften: | | | | |
| Schichtdicke | [µm] | 26 | 21 | 17 |
| Unterrostung | [mm] | | | |
| 480 h ASTM* unbehandeltes Blech | | 2.0 | 3.1 | 2.4 |
| (mit Cu-Zusatz) | | - | - | - |
| 1000 h ASTM* phosph. Blech | | 1.08 | 1.33 | 0.67 |
| 10 Zyklen Klimawechseltest** | | 0.92 | 0.79 | 1.50 |

| | | Nr. des Kunstharzbindemittels/Nr. des Vernetzers | | |
|---|---|---|---|---|
| | | 8/2 | 1/3 | 2/3 |
| Baddaten: | | | | |
| pH-Wert | | 7.3 | 7.4 | 7.3 |
| Leitfähigkeit | [µScm-1] | 1970 | 2410 | 2260 |
| Abscheidespannung | [V] | 320 | 320 | 320 |
| Filmeigenschaften: | | | | |
| Schichtdicke | [µm] | 22 | 14 | 14 |
| Unterrostung | [mm] | | | |
| 480 h ASTM* unbehandeltes Blech | | 2.7 | 3.2 | 2.4 |
| (mit Cu-Zusatz) | | - | 1.7 | 1.5 |
| 1000 h ASTM* phosph. Blech | | 0.33 | 0.18 | 0.13 |
| 10 Zyklen Klimawechseltest** | | 0.5 | 0.52 | 0.73 |

| | | Nr. des Kunstharzbindemittels/Nr. des Vernetzers | | |
|---|---|---|---|---|
| | | 3/3 | 4/3 | 5/3 |
| Baddaten: | | | | |
| pH-Wert | | 7.3 | 7.3 | 7.2 |
| Leitfähigkeit | [µScm-1] | 2180 | 2280 | 2280 |
| Abscheidespannung | [V] | 320 | 320 | 350 |
| Filmeigenschaften: | | | | |
| Schichtdicke | [µm] | 12 | 12 | 14 |
| Unterrostung | [mm] | | | |
| 480 h ASTM* unbehandeltes Blech | | 3.6 | 2.4 | 1.7 |
| (mit Cu-Zusatz) | | 2.1 | 1.6 | 1.4 |
| 1000 h ASTM* phosph. Blech | | 0.08 | 0.29 | 0.27 |
| 10 Zyklen Klimawechseltest** | | 0.49 | 0.6 | 0.69 |

| | | Nr. des Kunstharzbindemittels/Nr. des Vernetzers | | |
|---|---|---|---|---|
| | | 6/3 | 7/3 | 1/4 |
| Baddaten: | | | | |
| pH-Wert | | 7.2 | 7.1 | 7.6 |
| Leitfähigkeit | [µScm-1] | 2270 | 2050 | 2090 |
| Abscheidespannung | [V] | 260 | 350 | 320 |
| Filmeigenschaften: | | | | |
| Schichtdicke | [µm] | 14 | 6 | 22 |
| Unterrostung | [mm] | | | |
| 480 h ASTM* unbehandeltes Blech | | 3.8 | 9.9 | 3.6 |
| (mit Cu-Zusatz) | | 2.3 | 4.8 | - |
| 1000 h ASTM* phosph. Blech | | 0.20 | 0.12 | 0.63 |
| 10 Zyklen Klimawechseltest** | | 0.56 | 0.77 | 0.79 |

| | | Nr. des Kunstharzbindemittels/Nr. des Vernetzers | | |
|---|---|---|---|---|
| | | 2/4 | 3/4 | 4/4 |
| Baddaten: | | | | |
| pH-Wert | | 7.3 | 7.5 | 7.3 |
| Leitfähigkeit | [µScm-1] | 2110 | 1940 | 1870 |
| Abscheidespannung | [V] | 250 | 280 | 240 |
| Filmeigenschaften: | | | | |
| Schichtdicke | [µm] | 26 | 23 | 22 |
| Unterrostung | [mm] | | | |
| 480 h ASTM* unbehandeltes Blech | | 2.4 | 3.3 | 2.5 |
| (mit Cu-Zusatz) | | - | - | - |
| 1000 h ASTM* phosph. Blech | | 1.12 | 0.75 | 0.66 |
| 10 Zyklen Klimawechseltest** | | 0.92 | 1.21 | 1.54 |

| | | Nr. des Kunstharzbindemittels/Nr. des Vernetzers | | |
|---|---|---|---|---|
| | | 7/4 | 8/4 | 6/1 |
| Baddaten: | | | | |
| pH-Wert | | 7.1 | 7.4 | 7.3 |
| Leitfähigkeit | [µScm-1] | 2460 | 2240 | 2230 |
| Abscheidespannung | [V] | 340 | 310 | 260 |
| Filmeigenschaften: | | | | |
| Schichtdicke | [µm] | 12 | 22 | 24 |
| Unterrostung | [mm] | | | |
| 480 h ASTM* unbehandeltes Blech | | 9.8 | 3.8 | 2.3 |
| (mit Cu-Zusatz) | | - | - | - |
| 1000 h ASTM* phosph. Blech | | 0.30 | 0.21 | 0.30 |
| 10 Zyklen Klimawechseltest** | | 1.6 | 0.63 | 0.44 |

* Salzsprühtest nach DIN 50021

** nach Prüfblatt VDA 621415

**Ansprüche**

1. Stickstoffbasische Gruppen tragendes, durch Protonierung mit Säure wasserverdünnbares Kunstharz, erhältlich durch Umsetzung von

A) einem Epoxidharz mit einem mittleren Molekulargewicht Mn von 300 bis 6000 und im Mittel 1,5 bis 3,0 Epoxidgruppen pro Molekül mit

B) einem sekundären aliphatischen Amin und

C) einem primären Amin und/oder diprimären Diamin und

D) einem α-Aminosäureamidamin, erhältlich durch Kondensation einer α-Aminocarbonsäure der allgemeinen Formel

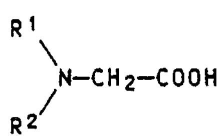

I,

wobei $R^1$ und $R^2$ gleich oder verschieden sind und für Wasserstoff-, Alkyl-, Cycloalkyl-, Hydroxyalkyl-, Alkoxyalkyl- oder Carboxyalkyl-Reste stehen, mit einem 1,5 bis 10 molaren Überschuß, bezogen auf die Carboxylgruppen, eines diprimären Diamins und ggf. anschließender Abdestillation des überschüssigen Diamins.

2. Kunstharz nach Anspruch 1, erhältlich unter Verwendung einer Komponente (C), deren Aminogruppen ketiminisiert sind.

3. Kunstharz nach Anspruch 1 oder 2, erhältlich unter Verwendung einer Komponente (D), deren Aminogruppen ketiminisiert sind.

4. Kunstharz nach einem der Ansprüche 1 bis 3, erhältlich unter Verwendung von 1 bis 2 Äquivalenten der Amine und Ketimine der Komponenten (B), (C) und (D) pro Epoxid-Äquivalent des Epoxidharzes (A).

5. Kunstharz nach einem der Ansprüche 1 bis 4, erhältlich unter Verwendung von weniger als 10 Gew.% der Komponente (D), bezogen auf die Gesamtmenge des Kunstharzes.

6. Verwendung des Kunstharzes gemäß einem der Ansprüche 1 bis 5, enthaltend ggf. Vernetzer, organische Lösemittel, Pigmente und/oder weitere Hilfsstoffe, in Form einer wäßrigen Dispersion als Überzugsmittel.

7. Verwendung des Kunstharzes gemäß einem der Ansprüche 1 bis 5, enthaltend ggf. Vernetzer, organische Lösemittel, Pigmente und/oder weitere Hilfsstoffe, in Form einer wäßrigen Dispersion für die kathodische Elektrotauchlackierung elektrisch leitfähiger Substrate.

8. Mit einem Lacküberzug versehener Gegenstand, erhältlich unter Verwendung eines Kunstharzes gemäß einem der Ansprüche 1 bis 5.